# FASCICULE DE BREVET EUROPEEN

(11) **EP 3 729 383 B1**
(45) Date de publication et mention de la délivrance du brevet: **01.11.2023**
(21) Numéro de dépôt: 18808045.1
(22) Date de dépôt: 03.12.2018
(51) Int. Cl.: G06K 7/10, G06K 7/00, G06F 21/35, G07C 9/20, G07C 9/29

(54) **AGRÉGATEUR DE DISPOSITIFS D'IDENTIFICATION**
AGGREGATOR VON IDENTIFIKATIONSVORRICHTUNGEN
AGGREGATOR OF IDENTIFICATION DEVICES

(30) Priorité: 19.12.2017 FR 1762485
(43) Date de publication de la demande: 28.10.2020
(73) Titulaire: Electricité de France, 75008 Paris (FR)
(72) Inventeur: TONNOIR, Sandrine, 91400 SACLAY (FR)
(74) Mandataire: Plasseraud IP
(86) Numéro de dépôt international: PCT/EP2018/083385
(87) Numéro de publication internationale: WO 2019/120971

(56) Documents cités:
- EP-A1- 1 942 468
- WO-A1-2010/143162
- US-A- 5 402 095
- US-A1- 2008 014 867
- US-A1- 2012 169 462

## Description

L'invention relève du domaine des systèmes de sécurisation d'accès physiques, en particulier ceux fonctionnant au moyen de clés électroniques ou magnétiques.

Pour maîtriser les accès physiques d'un lieu, il est commun de remplacer les verrous mécaniques par des systèmes électroniques, notamment lorsque le nombre de personnes à contrôler est élevé. En général, une installation de verrous fixes et commandés de manière centralisée est associée aux accès physiques, tandis que des clés électroniques sont confiées aux usagers. Ainsi, les verrous ne se déverrouillent que sur présentation d'une clé valide et reconnue par l'installation fixe. Les clés électroniques prennent souvent la forme d'un badge d'identification propre à chaque usager ou groupe d'usagers. La centralisation des installations rend aisée et rapide les modifications informatiques, dont les règles associées à chaque clé électronique. Ainsi, il est possible de rendre une nouvelle clé valide ou au contraire de rendre inopérante une clé égarée ou dérobée. De telles opérations peuvent être mises en oeuvre sans intervenir physiquement sur chaque verrou que compte l'installation et sans que la présence physique de la clé ne soit nécessaire. De tels systèmes sont par exemple mis en oeuvre pour sécuriser les accès des locaux d'entreprises, des parties communes de logements collectifs ou des transports en communs. US 2008/0014867 décrit un appareil logeant une pluralité de clés électroniques et formant interface entre les clés et un appareil tiers. Cependant, un tel appareil devient inutilisable en l'absence des clés électroniques correspondantes. EP 1942468 A1 décrit un appareil porte-badge permettant d'agréger les codes d'accès de plusieurs badges d'identification électroniques afin de centraliser divers droits d'accès dans un seul dispositif. Cet appareil reste utilisable en l'absence des badges respectifs.

De tels systèmes sont généralement incompatibles entre eux. Par conséquent, chaque personne doit disposer d'autant de clés électroniques que de systèmes qu'il est amené à utiliser. À l'image d'un trousseau de clés mécaniques, chaque personne doit disposer d'un ensemble de clés électroniques. Ceci est peu pratique et encombrant. En outre, en cas de perte ou de vol d'une clé rarement utilisée, une longue période peut s'écouler avant que la perte ou le vol ne soit déclaré et que la clé soit neutralisée (rendue inopérante) dans l'installation correspondante. Il en résulte un risque que la clé égarée/volée soit utilisée par une personne mal intentionnée. De telles situations peuvent se produire lorsque des opérateurs doivent pouvoir accéder à divers sites utilisant des systèmes d'accès différents et incompatibles, par exemple à des sites d'une même entreprise géographiquement éloignés les uns des autres. Ce type de problématiques tend à se reproduire dans un contexte où les personnes sont de plus en plus amenées à changer fréquemment de site géographique, en particulier dans l' activité professionnelle.

Il est théoriquement possible de rendre les systèmes compatibles les uns avec les autres de sorte qu'une clé soit reconnue par plusieurs systèmes distincts. Cela implique de modifier un grand nombre des installations existantes, ce qui est techniquement complexe, commercialement improbable et en pratique très onéreux.

L'invention vient améliorer la situation.

Il est proposé un dispositif selon la revendication 1.

Un tel dispositif est autonome en énergie et permet d'enregistrer les données contenues sur une pluralité de clés électroniques, ou badges, notamment les données d'identification nécessaires à l'ouverture des verrous associés aux clés respectives. Un tel dispositif peut donc être utilisé en lieu et place de plusieurs clés électroniques, indépendamment des technologies mises en oeuvre par chacun des systèmes. Ainsi, les clés et badges originaux sont rendus inutiles et peuvent être rangés sans que l'utilisateur ait besoin de les garder sur soi. Les clés et badges originaux peuvent même être supprimés. Dans un second temps, les données mémorisées sur le dispositif peuvent être transmises sélectivement sous une forme adaptées à des lecteurs d'une installation existante pour permettre l'identification de l'utilisateur et l'ouverture des accès correspondants. Le dispositif peut en outre fournir des services annexes à celui des accès physiques, par exemple en reproduisant, en partie au moins, d'autres données initialement présentes sur les badges existant. Cela permet au porteur du dispositif de s'identifier pour accéder physiquement à des zones d'un site et aussi d'accéder, par l'intermédiaire d'interfaces informatiques existantes, à des services divers tels qu'un réseau interne ou un système d'information.

Selon un autre aspect, la demanderesse propose un procédé selon la revendication 7.

Selon un autre aspect de l'invention, la demanderesse propose un programme informatique comportant des instructions pour la mise en oeuvre du procédé tel que défini dans les présentes lorsque ce programme est exécuté par le dispositif. Selon un autre aspect de l'invention, la demanderesse propose un support d'enregistrement non transitoire, lisible par un ordinateur, sur lequel est enregistré un tel programme.

Les caractéristiques suivantes peuvent, optionnellement, être mises en oeuvre. Elles peuvent être mises en oeuvre indépendamment les unes des autres ou en combinaison les unes avec les autres :
- Le dispositif prend la forme d'un objet portable-sur-soi. Cela permet à l'utilisateur d'interagir avec son environnement sans même tenir le dispositif à la main et en assurant les fonctions usuelles d'un badge inerte telles qu'être identifié visuellement par des opérateurs.
- L'au moins un lecteur inclut un lecteur de radio-étiquettes et/ou un lecteur de bande magnétique, et/ou l'au moins un module de communication sans fil inclut une bande magnétique, une radio-étiquette, un module de communication en champ proche, un module de communication à très courte portée, ou une combinaison de tels éléments. Cela permet de rendre le badge compatible avec une grande variété de systèmes existants.
- L'unité de traitement est en outre agencée pour chiffrer les données stockées sur l'organe de stockage de données. Cela limite les risques d'utilisation mal intentionnée des données au cas où le dispositif viendrait à disposition d'une personne autre que l'utilisateur légitime.
- Le dispositif comprend en outre une boucle magnétique, de sorte que la batterie est rechargeable par induction. Cela permet de rendre le dispositif compatible avec les systèmes de rechargement par induction et dispense de l'utilisation de chargeur à câble.
- Le dispositif comprend en outre une interface reliée à l'unité de traitement et activable par un utilisateur, l'unité de traitement étant en outre agencée pour déclencher l'envoi d'un signal par l'intermédiaire d'au moins un module de communication sans fil en réponse à l'activation de ladite interface. Cela permet de donner accès au porteur du dispositif à des services proposés par les infrastructures et systèmes du lieu visité.

D'autres caractéristiques, détails et avantages de l'invention apparaîtront à la lecture de la description détaillée ci-après, et à l'analyse des dessins annexés, sur lesquels :
- la figure 1 montre un mode de réalisation d'un dispositif selon l'invention dans lequel un badge préexistant s'insère ;
- la figure 2 montre le mode de réalisation de la figure 1 lorsque le badge existant est maintenu dans le dispositif ;
- la figure 3 est une représentation schématique de composants d'un dispositif selon l'invention ; et
- les figures 4 et 5 montrent deux faces opposées d'un dispositif selon un mode de réalisation de l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

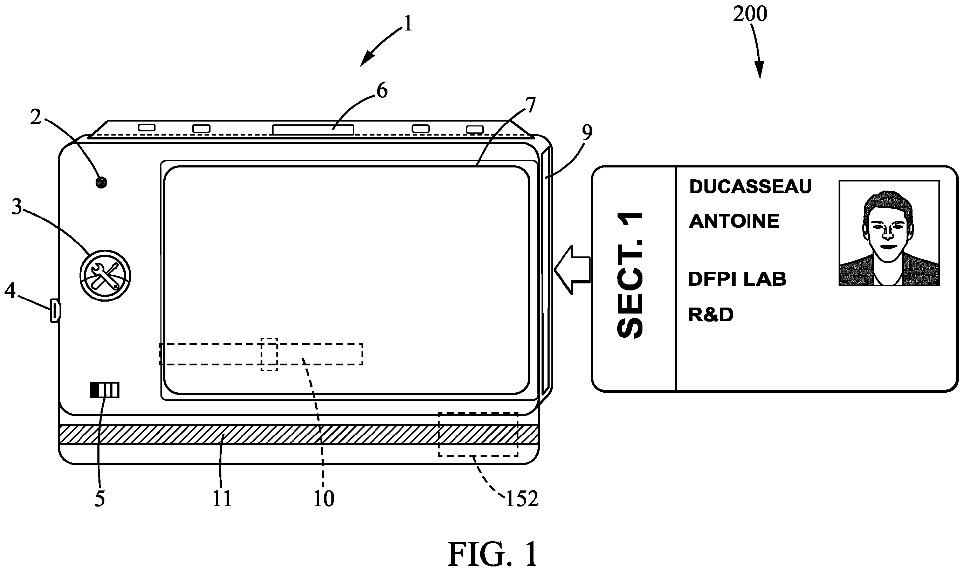

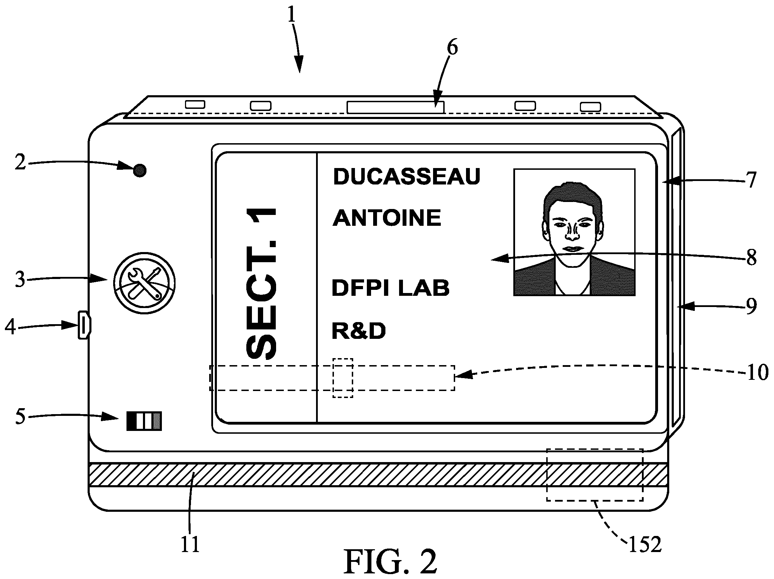

La figure 1 représente un dispositif 1 d'identification personnel à côté duquel est disposé un badge 200. La figure 2 représente le dispositif 1 à l'intérieur duquel a été inséré le badge 200. Le badge 200 comprend des données d'identification personnelle. Dans l'exemple décrit ici, le badge 200 prend la forme d'une carte en matière plastique sensiblement rectangulaire et de la taille d'une carte de paiement usuelle, à savoir conforme à la norme ISO 7810 : 85,60 par 53,98 millimètres. Le badge 200 comprend une radio-étiquette. La radio-étiquette, inclut une puce électronique associée à une antenne. La puce stocke, notamment, les données d'identification. Les données d'identification comprennent un identifiant personnel, par exemple sous forme d'un numéro. En variante, les données d'identification peuvent inclure d'autres informations sur une personne, ou « porteur ». Les données sont accessibles via l'antenne par un lecteur de radio-étiquette. Un tel lecteur est apte à envoyer une requête à la puce et à fournir l'énergie sous forme magnétique qui permet à la puce, en réponse, d'envoyer via l'antenne les données requises. Une telle technologie est connue sous le sigle « RFID » pour « *Radio Frequency Identification* », ou radio-identification.

Dans des variantes, des badges d'autres formes que celle d'une carte peuvent être compatibles avec le dispositif 1. Les badges prennent par exemple la forme d'un objet monobloc propre à être accroché à un anneau avec des clés mécaniques. Dans des variantes, les badges comprennent des données d'identification personnelle stockées et accessibles par d'autres technologie que le RFID. Par exemple, les données peuvent être stockées sous forme magnétique. Ainsi, les badges peuvent inclure une piste magnétique, sur un support en forme de carte ou sur un autre type de support.

Dans l'exemple décrit ici, le badge 200 porte en outre, sur au moins l'une de ses deux faces, des informations visuelles, notamment relatives à l'identité de l'utilisateur : Nom, prénom, fonction, photo et identification des zones d'un site auxquelles il est autorisé à accéder.

Dans des modes de réalisation, le dispositif 1 prend la forme d'un objet portable-sur-soi. Par « portable-sur-soi », on entend ici que le dispositif 1 peut non seulement être porté à la main mais aussi et surtout porté par l'utilisateur sans utiliser ses mains. Par exemple, le dispositif 1 peut être placé dans une poche de veste ou de chemise, être pincé à un vêtement, porté autour du cou ou du poignet, etc. Le terme « portable-sur-soi » est utilisé en remplacement de l'anglicisme « *wearable* » et en l'absence d'un autre équivalent français communément admis.

Dans des modes de réalisation, le dispositif 1 comprend un corps dans lequel est ménagé un logement de formes et dimensions aptes à recevoir au moins un badge 200. Ainsi, le dispositif 1 permet d'agréger informatiquement/électroniquement les données d'identification et permet en outre de contenir physiquement un badge ou de regrouper physiquement une pluralité de badges.

Le dispositif 1 représenté sur les figures comprend un corps prenant la forme d'un boîtier ou étui de type « porte-badge ». L'exemple représenté est donc à la fois portable-sur-soi et apte à loger au moins un badge 200. Le dispositif 1 comprend ici une lumière 6 de forme et dimension permettant l'insertion d'accessoires d'accroche de type cordon, sangle ou pince de sorte que le dispositif 1 peut être aisément porté par l'utilisateur sans utiliser ses mains. Le dispositif 1 présente une fenêtre 7, évidée ou pourvue d'une protection transparente, adaptée de sorte que les informations visuelles portées par le badge 200 restent visibles une fois le badge 200 inséré dans le dispositif 1. Le dispositif 1 présente une fente 9 de forme et de dimension sélectionnée de sorte que le badge 200 s'insère dans le corps par l'intermédiaire de la fente 9. Dans l'exemple décrit ici, le dispositif 1 comprend en outre un organe 10 de facilitation d'extraction du badge 200, représenté en transparence sur la figure 1. L'organe 10 prend, par exemple, la forme d'une languette permettant de pousser le badge 200 à l'extérieur du dispositif 1.

Dans des variantes, le dispositif 1 comprend un corps de formes et dimensions différentes de celles d'un porte-badge. Par exemple, le dispositif 1 présente des formes et dimensions adaptées pour loger d'autres badges que des cartes ou une pluralité de badges de différentes formes et dimensions.

De manière générale, il est considéré que le dispositif, pour être considéré comme « portable-sur-soi », présente :
- un encombrement limité, par exemple des dimensions maximales généralement inférieures à 12 centimètres, et de préférence une forme sensiblement plane d'épaisseur inférieure 10 millimètres, et
- une masse, batterie comprise, inférieure à 300 grammes.

Dans l'exemple décrit ici, le dispositif 1 comprend en outre un port 4, ici de type « micro-USB ». Le port 4 permet un accès informatique aux composants internes du dispositif 1 qui seront décrits ci-après. Le port 4 permet aussi le rechargement d'une batterie décrite plus en détail ci-après.

Le dispositif 1 comprend en outre un voyant de connexion 2. Le voyant de connexion 2 forme un indicateur visuel de l'état du réseau tel que détecté par le dispositif 1. Le dispositif 1 comprend en outre un témoin d'état de charge 5. Le témoin d'état de charge 5 forme un indicateur visuel de l'état de charge de la batterie interne et permet à l'utilisateur d'estimer l'autonomie restante du dispositif 1. Le témoin de charge 5 prend ici la forme d'un jeu de diodes.

Le dispositif 1 comprend en outre une interface 3, ici sous la forme d'un bouton, activable par l'utilisateur. L'activation de l'interface 3 déclenche l'envoi d'un signal depuis le dispositif 1. Le signal est envoyé par l'intermédiaire d'un module de communication sans fil décrit ci-après. Un tel signal peut, par exemple, être un signal d'activation d'un équipement tiers compatible et situé à proximité du dispositif 1. Par exemple, un équipement disposé à proximité incluant un écran tactile et/ou des enceintes peut, à réception du signal d'activation, s'activer et proposer des services par défaut (par exemple afficher un plan des lieux) et/ou des services dédiés (sélectionnés en fonction des données d'identification transmises par le dispositif 1 à l'équipement tiers parallèlement au signal d'activation). Une telle interface peut également être utilisée en cas d'urgence, par exemple pour signaler un incident ou déclencher l'envoi de secours, et optionnellement déclencher une géolocalisation. Différents types d'interactions peuvent être prévues pour envoyer des signaux différents (appuis courts, longs ou répétés par exemple).

Le dispositif 1 comprend une piste magnétique 11 agencée de sorte qu'elle puisse être lisible par un lecteur tiers à glissement en passant le dispositif 1 dans ledit lecteur tiers.

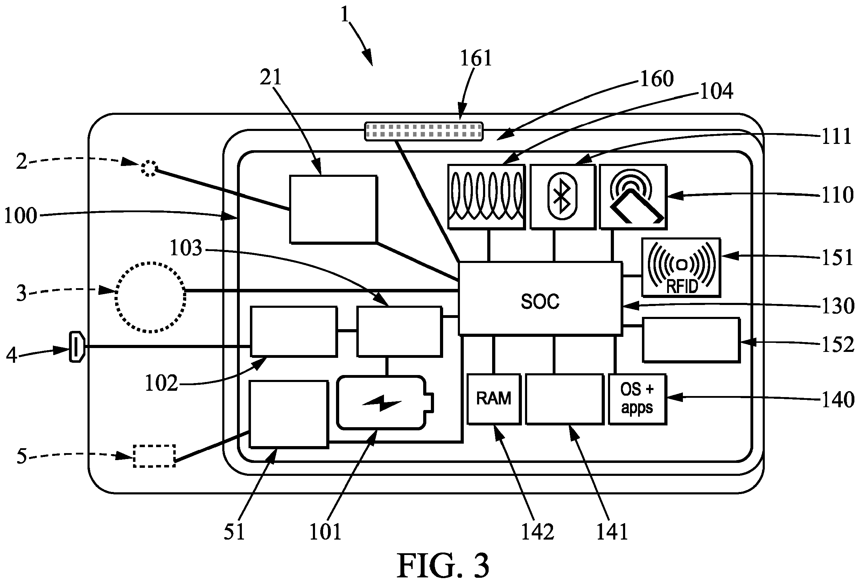

La figure 3 représente un exemple d'architecture interne du dispositif 1. La figure 3 représente schématiquement les éléments fonctionnels du dispositif 1 et leurs interactions. La figure 3 n'est pas représentative de l'organisation physique des éléments du dispositif 1. Par exemple, deux éléments fonctionnels représentés distinctement sur la figue 3 peuvent être mis en oeuvre par un composant matériel commun du dispositif 1.

De manière générale, le dispositif comprend :
- au moins un lecteur apte à lire des données issues d'un badge d'identification,
- une unité de traitement,
- au moins un organe de stockage de données,
- au moins un module de communication sans fil, et
- une batterie interne.

Dans l'exemple décrit ici et représenté en figure 3, le dispositif 1 comprend, en plus des éléments visibles depuis l'extérieur et décrits relativement aux figures 1 et 2, un ensemble 100 d'éléments internes (par exemple regroupés sur une carte électronique) :
- l'unité de traitement 130 ;
- la batterie 101 interne ;
- un module 103 de gestion de l'énergie ;
- un organe de contrôle 102 du port 4 (ici micro-USB) ;
- un contrôleur 51 du témoin d'état de charge 5 ;
- un contrôleur 21 du voyant de connexion 2 ;
- un système d'exploitation 140 ;
- deux lecteurs aptes à lire des données issues d'un badge d'identification 200, à savoir :
   - un lecteur de radio-étiquette (RFID), et
   - un lecteur magnétique 152 ;
- deux organes de stockage de données, à savoir :
   - une mémoire flash 141 de stockage à long terme, et
   - une mémoire de travail RAM 142 ;
- quatre modules de communication sans fil, à savoir :
   - une bande magnétique 11,
   - une radio-étiquette (RFID) active couplée à une antenne,
   - un module 110 de communication en champ proche (NFC),
   - un module 111 de communication à très courte portée (Bluetooth).

Dans le listage précédent, on distingue le lecteur de radio-étiquette (RFID) de la radio-étiquette (RFID) active couplée à une antenne pour en distinguer les fonctions respectives. Néanmoins, ces éléments peuvent être structurellement regroupés en une interface de radio-identification (RFID), référencée 151 sur la figure 3.

Chacun des éléments ci-dessus est relié à l'unité de traitement 130.

Dans l'exemple décrit ici, le port 4 sous forme de port micro-USB permet une compatibilité mécanique avec un grand nombre d'équipements existants, notamment des ordinateurs, au moyen d'un câble répandu et connu en tant que tel. Dans l'exemple décrit ici, le port 4 est en outre utilisé en tant que prise pour la recharge de la batterie 101 interne, par l'intermédiaire de l'organe de contrôle 102 et du module 103 de gestion de l'énergie. Dans des variantes, le port 4 peut être d'une autre forme, par exemple USB mini-AB, ou encore être conforme à d'autres standards que USB. Dans l'exemple décrit ici, en plus du port 4, le dispositif 1 comprend une autre entrée pour l'énergie : un récepteur d'énergie par induction 104, ou boucle magnétique, permettant une recharge sans fil de la batterie 101. En présence d'un autre moyen de rechargement tel que le port 4, un tel récepteur 104 est optionnel.

Dans des variantes, le port 4 peut être absent. Dans ces cas, l'échange de données entre le dispositif 1 et un équipement tiers peut être assuré au moyen de l'un au moins des modules de communication 110, 111 et/ou au moyen d'un module de communication sans fil supplémentaire, tandis que l'acquisition d'énergie peut être assurée au moyen d'une autre entrée, telle que le récepteur d'énergie par induction 104.

Dans l'exemple représenté en figure 3, le dispositif 1 comprend en outre un organe optionnel : un écran 160 visible depuis l'extérieur et relié par l'intermédiaire d'un connecteur 161 à l'unité de traitement 130. L'écran 160 est, ici, de type papier électronique (ou « *e-paper* ») et permet d'afficher des paramètres du dispositif 1 tout en ayant une faible consommation d'énergie.

Ici, on distingue le système d'exploitation 140 de la mémoire flash 141 destinée à stocker des données, notamment d'identification. En pratique, le système d'exploitation et les autres données peuvent être stockées sur des supports d'enregistrement non transitoire analogues les uns aux autres, ou même être stockés sur un même support. Par exemple, une unique mémoire peut être partitionnée de manière à stocker distinctement les données relatives au système d'exploitation 140 et les autres données.

L'unité de traitement 130 peut aussi être appelée contrôleur. L'unité de traitement 130 comprend au moins un processeur, par exemple sous la forme d'un système sur une puce ou « SoC » pour « *System on a Chip* ». Tous les composants électroniques du dispositif 1 sont reliés à l'unité de traitement 130. L'unité de traitement 130 pilote et gère l'ensemble des composants électroniques et exécutent les fonctions logicielles du dispositif 1. Le dispositif 1 étant prévu pour être occasionnellement connecté à un équipement informatique source, les composants logiciels du dispositif 1, y compris le système d'exploitation 140, peuvent aisément être mis à jour, y compris par l'intermédiaire de modules de communication sans fil 110, 111.

Les lecteurs aptes à lire des données issues d'un badge d'identification 200, permettent au dispositif 1 de s'adapter à divers types de badges 200 existants, en particulier à diverses technologies liées aux systèmes de contrôle d'accès physique existants. La pluralité de lecteurs permet au dispositif 1, notamment l'unité de traitement 130, d'acquérir des données issues de badges de différents types.

Le lecteur de radio-étiquette (RFID) est agencé pour requérir et recevoir des données stockées sur une puce RFID tierce (d'un badge 200 de type RFID) lorsque le dispositif 1 est approché d'un tel badge 200. Le lecteur magnétique 152 est agencé pour lire des données stockées sous forme magnétique, par exemple sur une piste magnétique tierce (d'un badge 200 à bande magnétique) lorsque le dispositif 1 est approché d'un tel badge 200.

Les modules de communication 11, 110, 111, 151, 152 permettent au dispositif 1 de s'adapter à divers environnements, en particulier à diverses architectures et technologies de systèmes de contrôle d'accès physique existants. Par exemple, certaines catégories d'ondes électromagnétiques peuvent être proscrites dans des environnements particuliers. La pluralité de modules de communication permet d'adapter à volonté les moyens de communications mis en oeuvre par le dispositif 1.

La piste magnétique 11 est agencée de sorte qu'elle puisse être lisible par un lecteur tiers à glissement en passant le dispositif 1 dans ledit lecteur. Ainsi un lecteur magnétique tiers peut lire les données stockées sous forme magnétique par le dispositif 1. La radio-étiquette et l'antenne de l'interface RFID 151 sont agencées pour transmettre les données stockées sur la puce lorsque le dispositif 1 est approché d'un lecteur radio-identification (RFID) tiers. Ainsi un lecteur RFID tiers peut lire les données stockées dans la puce RFID du dispositif 1. Le module 110 de communication en champ proche (ou NFC pour « *Near Field Communication* ») a une portée généralement inférieure à 10 centimètres. Il est agencé pour transmettre des données stockées sur un organe de stockage du dispositif 1 à un lecteur NFC tiers. Dans des modes de réalisation, le module 110 peut aussi former un lecteur NFC de sorte qu'il est apte à acquérir des données depuis une interface NFC tierce, par exemple pour obtenir des données d'identification. Le module 111 de communication à très courte portée a une portée généralement inférieure à 20 mètres, par exemple selon les normes Bluetooth. Il est quant à lui agencé pour transmettre des données stockées sur un organe de stockage du dispositif 1 à un module de communication à très courte portée tiers. Dans des modes de réalisation, le module 111 peut aussi former un lecteur Bluetooth de sorte qu'il est apte à acquérir des données depuis une interface Bluetooth tierce, par exemple pour obtenir des données d'identification.

Les cas des modules 110 et 111 utilisés en tant que lecteurs (au sens d'acquisition de données d'identification) peuvent par exemple permettre de rendre le dispositif 1 compatible avec un système de contrôle d'accès existant, par exemple en présentant le dispositif 1 à l'accueil d'un site pour y enregistrer un identifiant autorisé à ouvrir les accès, plutôt qu'en acquérant les données depuis un badge existant, les badges existants étant généralement passifs et dépourvus d'interface NFC active ou de Bluetooth.

Le module 103 de gestion de l'énergie est agencé de manière à piloter la charge de la batterie 101 par l'intermédiaire, ici, du port 4. Le module 103 de gestion de l'énergie est agencé de manière à alimenter en énergie les autres composants du dispositif 1. Dans les modes de réalisation incluant un récepteur d'énergie par induction 104, le module 103 est en outre agencé de manière à piloter la charge de la batterie 101 par l'intermédiaire du récepteur d'énergie par induction 104.

La batterie 101 et le module 103 de gestion de l'énergie permettent au dispositif 1 de continuer à fonctionner indépendamment de la disponibilité d'une source d'énergie externe. Ainsi, le dispositif 1 peut être prévu pour être rechargé par une source externe, par exemple lorsque temporairement branché sur le port USB d'un ordinateur ou disposé à proximité d'une base de rechargement par induction (dans le cas du récepteur 104 à induction). La batterie 101 permet en outre de modifier les données stockées sur la puce RFID sans qu'il soit nécessaire de relier le dispositif 1 à un équipement tiers : la radio-étiquette est donc active, par opposition aux radio-étiquettes passives dépourvue de source d'énergie.

L'organe de contrôle 102 du port 4, le contrôleur 51 du témoin d'état de charge 5 et le contrôleur 21 du voyant de connexion 2 peuvent être considérés comme des sous-unités de l'unité de traitement 130 dont les fonctions sont limités au pilotage de l'élément respectif (le port 4, le témoin d'état de charge 5 et le voyant de connexion 2). Autrement dit, le pilotage est assuré par l'unité de traitement 130 par l'intermédiaire des sous-unités.

Le système d'exploitation 140 désigne la partie logicielle mise en oeuvre par l'unité de traitement 130 pour assurer les fonctions décrites ci-après. Le système d'exploitation 140 prend la forme de données stockées sur l'un des organes de stockage de données.

L'unité de traitement 130 est agencée pour :
- acquérir des données issues d'au moins un badge d'identification, par exemple le badge 200, par l'intermédiaire d'un lecteur, par exemple le lecteur de radio-étiquette 151 ou le lecteur magnétique 152,
- stocker les données acquises sur un organe de stockage de données, par exemple la mémoire flash 141,
- si les données acquises sont chiffrées, déchiffrer les données, par exemple au moyen de composants logiciels mis en oeuvre par un processeur de l'unité de traitement 130,
- transmettre une partie au moins des données acquises, par l'intermédiaire d'un module de communication sans fil, par exemple la bande magnétique 11, la radio-étiquette (RFID) couplée à une antenne, le module 110 de communication en champ proche (NFC) ou le module 111 de communication à très courte portée (Bluetooth), et sur requête depuis un lecteur externe au dispositif 1 par exemple une borne RFID, NFC ou magnétique.

Dans de premiers exemples, les étapes précitées sont réalisées successivement les unes à la suite des autres, sans interruption. Autrement dit, les données lues sont quasi-immédiatement transmises à un lecteur tiers. Dans ces premiers exemples, le badge 200 préexistant d'où proviennent les données est à proximité immédiate du dispositif 1, par exemple inséré à l'intérieur du dispositif 1 comme cela est représenté sur la figure 2, ou bien dans une poche ou un bagage de l'utilisateur lorsque la technologie de lecture permet une lecture sans contact. Dans ces exemples, l'utilisateur doit donc disposer du badge 200 et le laisser accessible au lecteur du dispositif 1 pour que l'unité de traitement 130 puisse relayer les données jusqu'à un lecteur tiers par 'intermédiaire d'un module de communication sans fil. Le dispositif 1 présente l'avantage de pouvoir convertir, à la volée, le signal d'origine du badge 200 en un signal adapté au lecteur tiers (le signal lu et le signal transmis pouvant être identiques ou différents l'n de l'autre). Cela permet notamment de rendre compatible un badge 200 et un lecteur tiers utilisant des technologies non directement compatibles. Par exemple, un opérateur disposant d'un badge de technologie NFC usuel sur un premier site physique, peut interagir avec un lecteur magnétique sur un autre site physique avec le même badge 200 et par l'intermédiaire du dispositif 1.

Dans de deuxièmes exemples, les étapes précitées sont mises en oeuvre de manière espacées dans le temps. Autrement dit, les données lues sont enregistrées, et optionnellement déchiffrées. Puis, dans un second temps, par exemple plusieurs minutes, heures ou jours plus tard, les données enregistrées sont, si besoin, déchiffrées, puis transmises à un lecteur tiers, par exemple sur requête dudit lecteur tiers. Dans ces deuxièmes exemples, le badge 200 préexistant d'où proviennent les données devient inutile une fois l'opération d'enregistrement effectuée. L'utilisateur peut conserver avec lui seulement le dispositif 1. Le dispositif 1 représenté aux figures 1 et 2 peut donc être utilisé vide de tout badge 200. L'option de l'écran 160 est alors particulièrement avantageuse en ce qu'elle permet de reproduire les éventuelles indications visuelles présentes sur le badge 200 d'origine. L'unité de traitement 130 peut notamment mettre en oeuvre les étapes de lecture-enregistrement plusieurs fois avec différents badges 200. Puis, seulement dans un second temps, les données relatives issues de l'un des badges 200 sont transmises à un lecteur tiers. Le dispositif 1 présente l'avantage de pouvoir convertir le signal d'origine du badge 200 en un signal adapté au lecteur tiers (signaux identiques ou différents). Cela permet notamment de rendre compatible un badge 200 et un lecteur tiers utilisant des technologies non directement compatibles. Cela permet également de libérer l'utilisateur de la contrainte de garder avec lui une pluralité de badges. Par exemple, un opérateur devant accéder à des sites distincts et sur lesquels des systèmes de contrôle d'accès différents sont installés peut utiliser le dispositif 1 en lieu et place de chacun des badges.

Dans les exemples décrits ici, les données reçues en clair (non chiffrées) sont chiffrées dès réception par l'unité de traitement 130, puis sont stockés de manière pérenne sous forme chiffrée sur un organe de stockage de données tel que la mémoire de travail RAM 142. Par exemple, les données reçues en clair sont mémorisées temporairement à réception au moyen de de la mémoire flash 141. Puis, les données en clair sont supprimées dès qu'une version chiffrée correspondante est mémorisée de manière pérenne.

L'utilisation du dispositif 1 en mode acquisition des données est similaire à celle d'un lecteur. Par exemple, un badge 200 incluant une puce et une antenne RFID sont approchées de l'interface de radio-identification (RFID) 151 du dispositif 1 pour déclencher la lecture et l'acquisition des données. Un badge 200 incluant une piste magnétique peut quant à lui être glissé le long du lecteur magnétique 152 pour déclencher la lecture et l'acquisition des données.

De préférence, le déchiffrement des données est effectué à la volée, c'est-à-dire immédiatement avant la transmission à un lecteur tiers. Ainsi, le contenu des données en version claire (non chiffrée) n'est pas stocké de manière durable sur le dispositif 1.

Les exemples du RFID et des pistes magnétiques sont les plus répandues dans les systèmes existants. En variante, d'autres technologies de communication de données d'identification peuvent être intégrées au dispositif 1, en complément ou en remplacement des technologies magnétique et/ou RFID.

Dans l'exemple décrit ici, le dispositif 1 est en outre agencé pour recevoir des données, notamment d'identification, par l'intermédiaire du port 4 et d'un équipement informatique tiers. Dans ce cas, l'existence d'un badge original peut être rendue superflue. Par exemple, un utilisateur équipé du dispositif 1 peut se présenter à l'accueil d'un site en tant que visiteur. Des données d'identification peuvent alors être échangées entre le dispositif 1 et un système de contrôle d'accès tiers existants, de sorte que les données d'identification mémorisées sur le dispositif 1 soient ensuite reconnues par les différents lecteurs du système de contrôle d'accès du site. Ainsi, il est inutile de fournir un badge « visiteur » physique. Cela permet de limiter l'émission de badge physique. En outre, les modes de réalisation du dispositif 1 permettant d'afficher des données d'identification visuelles tel que la fenêtre 7 ou l'écran 160 remplacent avantageusement les badges visiteurs généralement vierges ou dépourvus de telles informations visuelles. Les contrôles visuels par des opérateurs sur site sont aussi facilités.

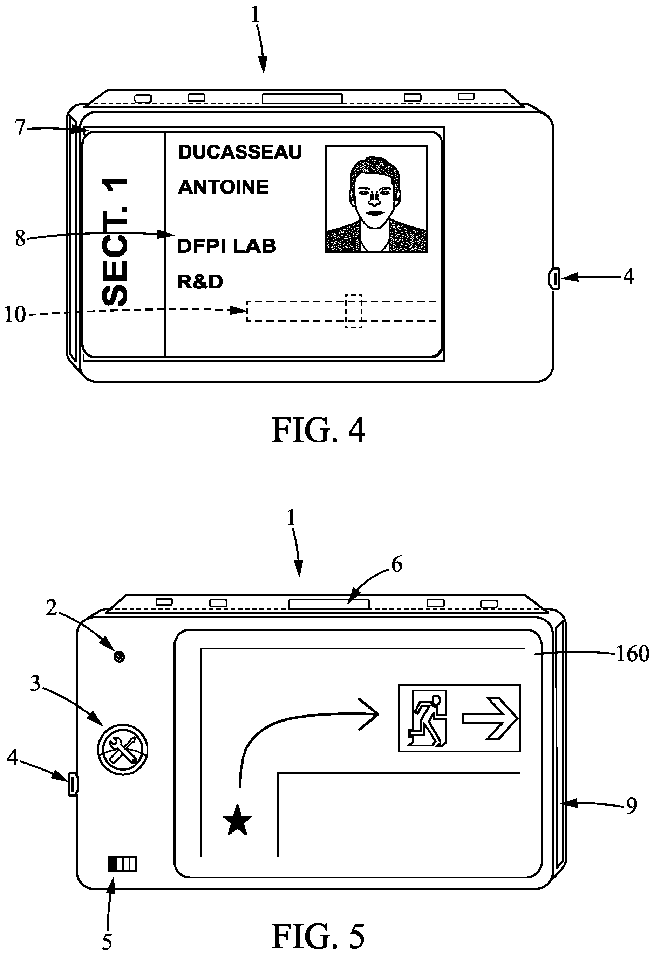

Les figures 4 et 5 représentent respectivement une face arrière et une face avant d'un mode de réalisation du dispositif 1. Bien entendu, rien n'empêche une utilisation inversée des faces avant et arrière. Les éléments analogues à ceux du mode de réalisation des figures précédentes portent les mêmes références numériques. Dans cet exemple, le dispositif 1 comprend un écran 160 de type papier électronique s'étendant sur une majeure partie de sa face avant. Cet exemple illustre la possibilité d'afficher des informations de manière dynamique sur le dispositif 1 de manière à améliorer leur pertinence en fonction des situations. Ainsi, les informations visuelles du badge 200 restent accessibles et visibles au travers de la fenêtre 7 en face arrière, comme dans le mode de réalisation des figures 1 et 2, tandis qu'en face avant sont affichées des informations contextuelles. Les informations contextuelles incluent, par exemple, un lieu et une heure de réunion, les rendez-vous de la journée, des informations de sécurité propre au site, des évènements correspondant au site et à la date du jour, des visites de laboratoires, des informations relatives aux services particuliers auquel l'utilisateur peut accéder tels que des lieux de restauration, ou encore un guidage personnalisé dans les locaux, par exemple pour les personnes présentant un handicap ou une mobilité réduite. En variante, des informations d'identification peuvent aussi être affichée par l'écran 160, notamment lorsque le badge 200 est absent ou est dépourvu de telles informations visuelles.

Un tel dispositif 1 peut être propre à l'utilisateur tout en étant compatibles avec les infrastructures de plusieurs sites distincts et même si les infrastructures sont incompatibles et non communicantes les unes avec les autres. L'utilisateur conserve alors avec lui le dispositif 1. De manière imagée, le dispositif 1 forme un trousseau de clés électroniques. En variante, un tel dispositif 1 peut être prêté à un visiteur lors de son arrivée sur un site et rendu lors de son départ. Dans ce dernier cas, les données d'identification peuvent être chargées (enregistrées) sur le dispositif 1 avant même l'arrivée du visiteur et supprimées ou mises à jour après son départ pour être réutilisé par un autre visiteur.

Dans la description qui précède, des modes de réalisation du dispositif 1 ont été décrits. Les opérations mises en oeuvre par l'unité de traitement 130 peuvent aussi être vues comme un procédé mis en oeuvre par des moyens informatique. Un tel procédé représente un autre aspect de l'invention. Un tel procédé peut prendre la forme d'un programme informatique comportant des instructions pour la mise en oeuvre du procédé par un processeur ou par l'unité de traitement 130. Un tel programme peut être stocké sur un support d'enregistrement non transitoire lisible par un ordinateur, par exemple l'un des organes de stockage du dispositif 1.

## Revendications

1. Dispositif d'identification personnel (1) pour des systèmes de contrôle d'accès physiques comprenant :
- un corps dans lequel est ménagé un logement de formes et dimensions aptes à recevoir au moins un badge d'identification, une fenêtre (7) étant ménagée dans le corps de sorte que des informations visuelles portées par un badge placé dans le logement restent au moins en partie visible par la fenêtre,
- au moins un lecteur (151, 152) apte à lire des données issues d'un badge d'identification (200), lesdites données incluant au moins des données d'identification personnelle,
- une unité de traitement (130),
- un organe de stockage de données (142),
- au moins un module de communication sans fil (11, 110, 111, 151, 152), et
- une batterie (101) interne agencée de manière à alimenter en énergie les composants du dispositif,
- un écran (160) de type papier électronique apte à afficher des informations contextuelles et/ou un visuel reprenant au moins en partie le visuel d'un badge d'identification (200) préalablement lu, ledit écran (160) étant disposé sur la face opposée à la fenêtre (7) ménagée dans le corps, l'unité de traitement étant agencée pour :
- acquérir des données issues d'au moins un badge d'identification par l'intermédiaire du lecteur,
- piloter l'écran (160) de type papier électronique,
- stocker les données acquises sur l'organe de stockage de données, de sorte que lesdites données restent stockées indépendamment de l'accessibilité ultérieure dudit badge d'identification par le lecteur, puis
- si les données acquises sont chiffrées, déchiffrer les données, puis
- transmettre une partie au moins des données enregistrées à un lecteur externe au dispositif, par l'intermédiaire du module de communication sans fil, et sur requête depuis ledit lecteur externe au dispositif.

2. Dispositif selon la revendication 1, prenant la forme d'un objet portable-sur-soi.

3. Dispositif selon l'une des revendications précédentes, dans lequel :
- l'au moins un lecteur (151, 152) inclut un lecteur de radio-étiquettes (151) et/ou un lecteur de bande magnétique (152), et/ou
- l'au moins un module de communication sans fil (11, 110, 111, 151, 152) inclut une bande magnétique (11), une radio-étiquette (151), un module (110) de communication en champ proche, un module (111) de communication à très courte portée, ou une combinaison de tels éléments.

4. Dispositif selon l'une des revendications précédentes, dans lequel l'unité de traitement est en outre agencée pour chiffrer les données stockées sur l'organe de stockage de données.

5. Dispositif selon l'une des revendications précédentes, comprenant en outre une boucle magnétique (104), de sorte que la batterie est rechargeable par induction.

6. Dispositif selon l'une des revendications précédentes, comprenant en outre une interface (3) reliée à l'unité de traitement et activable par un utilisateur, l'unité de traitement étant en outre agencée pour déclencher l'envoi d'un signal par l'intermédiaire d'au moins un module de communication sans fil (110, 111, 151) en réponse à l'activation de ladite interface (3).

7. Procédé d'agrégation d'identifiants personnel sur un dispositif (1) pour des systèmes de contrôle d'accès physiques et mis en oeuvre par des moyens informatiques, ledit dispositif comprenant un corps dans lequel est ménagé un logement de formes et dimensions aptes à recevoir au moins un badge d'identification, une fenêtre (7) étant ménagée dans le corps de sorte que des informations visuelles portées par un badge placé dans le logement restent au moins en partie visible par la fenêtre, et un écran (160) de type électronique disposé sur la face opposée à la fenêtre (7) ménagée dans le corps, ledit procédé comprenant :
- acquérir des données issues d'au moins un badge d'identification (200) par l'intermédiaire d'un lecteur (11, 151), lesdites données incluant au moins des données d'identification personnelle,
- stocker les données acquises sur un organe de stockage de données (142), de sorte que lesdites données restent stockées indépendamment de l'accessibilité ultérieure dudit badge d'identification par le lecteur, puis
- si les données acquises sont chiffrées, déchiffrer les données, puis,
- transmettre une partie au moins des données enregistrées à un lecteur externe au dispositif, par l'intermédiaire d'un module de communication sans fil (110, 111, 151) et en réponse à une requête reçue depuis ledit lecteur tiers, le procédé comprenant en outre :
- piloter par l'unité de traitement (130) l'écran (160) afin d'afficher des informations contextuelles et/ou un visuel reprenant au moins en partie le visuel dudit au moins un badge d'identification (200).

## Patentansprüche

1. Persönliche Erkennungsvorrichtung (1) für physische Zugangskontrollsysteme, umfassend:
- einen Körper, in dem ein Gehäuse mit Formen und Abmessungen ausgebildet ist, die dazu geeignet sind, wenigstens eine Erkennungsmarke aufzunehmen, wobei ein Fenster (7) im Körper ausgebildet ist, so dass visuelle Informationen, die auf einer in dem Gehäuse platzierten Marke beinhaltet sind, wenigstens teilweise durch das Fenster sichtbar bleiben,
- wenigstens ein Lesegerät (151, 152), das Daten einer Erkennungsmarke (200) lesen kann, wobei die Daten wenigstens persönliche Erkennungsdaten umfassen,
- eine Verarbeitungseinheit (130),
- ein Datenspeicherelement (142),
- wenigstens ein drahtloses Kommunikationsmodul (11, 110, 111, 151, 152), und
- eine interne Batterie (101), die dazu angeordnet ist, die Komponenten des Geräts mit Energie zu versorgen,
- einen Bildschirm (160) vom Typ elektronisches Papier, der dazu geeignet ist, Kontextinformationen und/oder ein Bild anzuzeigen, das wenigstens teilweise das Bild einer zuvor gelesenen Erkennungsmarke (200) wiedergibt, wobei der Bildschirm (160) auf der Seite angeordnet ist, die dem Fenster (7) gegenüberliegt, das in den Körper ausgenommen ist, wobei die Verarbeitungseinheit dazu angeordnet ist:
- Daten, die von wenigstens einer Erkennungsmarke stammen, mittels des Lesegeräts zu erfassen,
- den Bildschirm (160) vom Typ elektronisches Papier zu steuern,
- die erfassten Daten auf dem Datenspeicherelement zu speichern, so dass die Daten unabhängig von der späteren Zugänglichkeit der Erkennungsmarke durch das Lesegerät gespeichert bleiben, dann
- wenn die erfassten Daten verschlüsselt sind, die Daten zu entschlüsseln, dann
- wenigstens einen Teil der gespeicherten Daten an ein Lesegerät außerhalb der Vorrichtung über das drahtlose Kommunikationsmodul und auf Anfrage von dem Lesegerät außerhalb der Vorrichtung zu übertragen.

2. Vorrichtung nach Anspruch 1 in Form eines Wearables.

3. Vorrichtung nach einem der vorhergehenden Ansprüche, wobei:
- das wenigstens eine Lesegerät (151, 152) ein Lesegerät für Funketiketten (151) und/oder ein Lesegerät für Magnetbänder (152) umfasst, und/oder
- das wenigstens eine drahtlose Kommunikationsmodul (11, 110, 111, 151, 152) ein Magnetband (11), ein Funketikett (151), ein Nahfeldkommunikationsmodul (110), ein Kurzstreckenkommunikationsmodul (111) oder eine Kombination solcher Elemente umfasst.

4. Vorrichtung nach einem der vorhergehenden Ansprüche, wobei die Verarbeitungseinheit ferner dazu angeordnet ist, die auf der Datenspeichereinheit gespeicherten Daten zu verschlüsseln.

5. Vorrichtung nach einem der vorhergehenden Ansprüche, ferner umfassend eine Magnetschleife (104), so dass die Batterie durch Induktion aufladbar ist.

6. Vorrichtung nach einem der vorhergehenden Ansprüche, ferner umfassend eine Schnittstelle (3), die mit der Verarbeitungseinheit verbunden ist und von einem Benutzer aktiviert werden kann, wobei die Verarbeitungseinheit ferner dazu angeordnet ist, als Reaktion auf die Aktivierung der Schnittstelle (3) den Versand eines Signals über wenigstens ein drahtloses Kommunikationsmodul (110, 111, 151) auszulösen.

7. Verfahren zur Aggregation persönlicher Identifikatoren auf einer Vorrichtung (1) für physische Zugangskontrollsysteme, implementiert durch Informatikmittel, wobei die Vorrichtung einen Körper umfasst, in dem ein Gehäuse mit Formen und Abmessungen ausgebildet ist, die dazu geeignet sind, wenigstens eine Erkennungsmarke aufzunehmen, wobei ein Fenster (7) in dem Körper ausgenommen ist, so dass visuelle Informationen, die auf einer in dem Gehäuse platzierten Marke beinhaltet sind, wenigstens teilweise durch das Fenster sichtbar bleiben, und ein Bildschirm (160) vom elektronischen Typ, der auf der Seite gegenüber dem in dem Körper ausgenommenen Fenster (7) angeordnet ist, wobei das Verfahren umfasst:
- Erfassen von Daten von wenigstens einer Erkennungsmarke (200) mittels eines Lesegerätes (11, 151), wobei die Daten wenigstens persönliche Erkennungsdaten umfassen,
- Speichern der erfassten Daten auf einem Datenspeicherelement (142), so dass die Daten unabhängig von der späteren Zugänglichkeit der Erkennungsmarke durch das Lesegerät gespeichert bleiben, dann
- wenn die erfassten Daten verschlüsselt sind, Entschlüsseln der Daten, dann,
- Übertragen wenigstens einen Teil der gespeicherten Daten an ein Lesegerät außerhalb der Vorrichtung mittels eines drahtlose Kommunikationsmoduls (110, 111, 151) und als Antwort auf eine von dem weiteren Lesegerät empfangene Anfrage, wobei das Verfahren ferner umfasst:
- Steuern des Bildschirms (160) durch eine Verarbeitungseinheit (130), um Kontextinformationen und/oder ein Bild anzuzeigen, das wenigstens teilweise das Bild der wenigstens einen Erkennungsmarke (200) wiedergibt.

## Claims

1. Personal identification device (1) for physical access control systems, comprising:
- comprising a body in which is provided a housing of shapes and dimensions suitable for receiving at least one identification badge, a window (7) being provided in the body so that visual information carried by a badge placed in the housing remains at least partially visible through the window,
- at least one reader (151, 152) capable of reading data from an identification badge (200), said data including at least personal identification data,
- a processing unit (130),
- a data storage member (142),
- at least one wireless communication module (11, 110, 111, 151, 152), and
- an internal battery (101) arranged to supply power to the components of the device,
- an electronic paper type of screen (160) able to display contextual information and/or visual elements reproducing at least partially visual elements of an identification badge previously read, said screen (160) being placed on an opposite face of the window (7) provided in the body,
the processing unit being arranged for:
- acquiring data from at least one identification badge by means of the reader,
- control the electronic paper type of screen (160)
- storing the acquired data in the data storage member, so that said data remain stored independently of the subsequent accessibility of said identification badge by the reader, then
- if the acquired data are encrypted, decrypting the data,
- transmitting at least a portion of the acquired data to a reader external to the device, via the wireless communication module and on request from said reader external to the device.

2. Device according to claim 1, taking the form of a wearable object.

3. Device according to one of the preceding claims, wherein:
- the at least one reader (151, 152) includes a radio tag reader (151) and/or a magnetic stripe reader (152), and/or
- the at least one wireless communication module (11, 110, 111, 151, 152) includes a magnetic stripe (11), a radio tag (151), a near-field communication module (110), a very short range communication module (111), or a combination of such elements.

4. Device according to one of the preceding claims, wherein the processing unit is further arranged to encrypt the data stored in the data storage member.

5. Device according to one of the preceding claims, further comprising an induction loop (104), such that the battery is rechargeable by induction.

6. Device according to one of the preceding claims, further comprising an interface (3) connected to the processing unit and user-activatable, the processing unit being further arranged to trigger the sending of a signal via at least one wireless communication module (110, 111, 151) in response to activation of said interface (3).

7. Method for aggregating personal identifiers on a device (1) for physical access control systems and implemented by computer means, said device comprising a body in which is provided a housing of shapes and dimensions suitable for receiving at least one identification badge, a window (7) being provided in the body so that visual information carried by a badge placed in the housing remains at least partially visible through the window and an electronic paper type of screen (160) placed on an opposite face of the window (7) provided in the body, said method comprising:
- acquiring data from at least one identification badge (200) by means of a reader (11, 151), said data including at least personal identification data,
- storing the acquired data in a data storage member (142), such that said data remain stored independently of the subsequent accessibility of said identification badge by the reader, then
- if the acquired data are encrypted, decrypting the data,
- transmitting at least a portion of the acquired data to a reader external to the device, via a wireless communication module (110, 111, 151) and in response to a request received from said third-party reader.
